**Europäisches Patentamt**

**European Patent Office**

**Office européen des brevets**

(19)

(11) Veröffentlichungsnummer : **0 314 943 B1**

(12) **EUROPÄISCHE PATENTSCHRIFT**

(45) Veröffentlichungstag der Patentschrift :
26.06.91 Patentblatt 91/26

(51) Int. Cl.$^5$ : **B29C 45/47**

(21) Anmeldenummer : **88116758.9**

(22) Anmeldetag : **10.10.88**

(54) **Kunststoff-Spritzgiesseinheit mit Verriegelungseinrichtung für Plastifizierzylinder und Förderschnecke.**

(30) Priorität : **22.10.87 DE 3735701**

(43) Veröffentlichungstag der Anmeldung :
**10.05.89 Patentblatt 89/19**

(45) Bekanntmachung des Hinweises auf die
Patenterteilung :
**26.06.91 Patentblatt 91/26**

(84) Benannte Vertragsstaaten :
**AT CH DE ES FR GB IT LI NL**

(73) Patentinhaber : **Hehl, Karl
Arthur-Hehl-Strasse 32
W-7298 Lossburg 1 (DE)**

(72) Erfinder : **Hehl, Karl
Arthur-Hehl-Strasse 32
W-7298 Lossburg 1 (DE)**

(74) Vertreter : **Mayer, Friedrich, Dr.
Patentanwälte Dr. Mayer & Frank Westliche 24
W-7530 Pforzheim (DE)**

EP 0 314 943 B1

Jouve, 18, rue Saint-Denis, 75001 PARIS

## Beschreibung

Die Erfindung bezieht sich auf eine Spritzgießeinheit entsprechend dem Oberbegriff des Patentanspruches 1.

Unter dem Begriff "Soll-Winkelstellung" im Sinne des Oberbegriffs ist die bei Stillstand der Rotation der Förderschnecke vorliegende Winkelstellung zu verstehen, welche Voraussetzung für das Verriegeln der Förderschnecke mit ihrer Antriebswelle im Rahmen eines programmgesteuerten Wechsels der aus Plastifizierzylinder und Förderschnecke bestehenden Plastifiziereinheit ist.

Bei einer bekannten Spritzgießeinheit der gattungsgemäßen Art (DE 35 28 154 C1) wirkt der die diametralen und die rotierbaren Schieber steuernde Hydraulikzylinder über wenigstens ein als Spreizkeil ausgebildetes Zwischenglied auf zwei diametral zur Förderschnecke angeordnete rotierbare Schieber zur Verriegelung der Förderschnecke. Der Spreizkeil dringt zur Erzeugung der Entriegelungsbewegung zwischen die beiden rotierbaren Schieber ein und treibt diese in Führungen rechtwinklig zur Arbeitsrichtung des Hydraulikzylinders aus Verriegelungsposition. Hierzu sind relativ aufwendige Führungen in einem gesonderten Gehäuse für die rotierbaren Schieber erforderlich.

Hiervon ausgehend liegt der Erfindung die Aufgabe zugrunde, eine Spritzgießeinheit der eingangs genannten Art derart weiterzubilden, daß günstigere Voraussetzungen für einen automatischen Wechsel der Plastifiziereinheit, aber auch für die Serienfertigung und für die Montage, insbesondere auch im Falle einer Nachrüstung oder eines Austausches der Kupplungseinrichtung für Reparaturzwecke vorliegen.

Diese Aufgabe wird erfindungsgemäß durch die im Patentanspruch 1 genannten Merkmale gelöst.

Diesen Merkmalen liegt ein Lösungsprinzip zugrunde, gemäß welchem die Bewegung eines radialen Schiebers zur Verriegelung bzw. Entriegelung des Plastifizierzylinders unmittelbar in eine entsprechende Bewegung des rotierbaren Schiebers zur Verriegelung bzw. Entriegelung der Förderschnecke umsetzbar ist, indem der radiale Schieber den rotierbaren Schieber bei dessen Soll-Winkelstellung mittels eines Mitnehmerorgans hintergreift.

Eine sehr einfache Gestaltung, Führung und Steuerung des rotierbaren Schiebers ist möglich, wenn dieser nach Patentanspruch 3 vom Einsteckende der Förderschnecke durchgriffen, also ringförmig gestaltet und vom diametralen Schieber von zwei entgegengesetzten Seiten her zur Mitnahme beaufschlagbar ist.

Eine hohe Sicherheit für die axiale Verriegelung der Förderschnecke ergibt sich, wenn nach Patentanspruch 4 der rotierbare Schieber bei der Entriegelungsbewegung vom radialen Schieber entgegen der Wirkung von Federn in Entriegelungsposition mitnehmbar ist, welche Federn den rotierbaren Schieber bei Verriegelungsbewegung in Verriegelungsposition drücken.

Zweckmäßigerweise ist die Durchgriffsöffnung für die Förderschnecke im rotierbaren Schieber als schlüssellochförmige Steueröffnung ausgebildet (Anspruch 5), die eine derartige Grundform aufweist, daß die Förderschnecke in einer Endstellung des Schiebers die Steueröffnung rotierbar durchgreift und in der anderen Endstellung mit der Förderschnecke zur axialen und radialen Festlegung verbunden ist.

Bei Ausbildung der Spritzgießeinheit nach einem der Patentansprüche 8 bis 9 ist ein weiterer Schieber nach dem gleichen Lösungsprinzip wie der rotierbare Schieber von demjenigen radialen Schieber zur Verriegelungsbewegung mitnehmbar, der an der Verriegelung des rotierbaren Schiebers nicht teilhat. Dieser weitere am Plastifizierzylinder geführte Schieber dient der axialen Festlegung der Förderschnecke im Plastifizierzylinder außerhalb der Spritzgießeinheit, insbesondere beim Wechsel der Plastifiziereinheit.

Bei einer Ausbildung der Spritzgießeinheit nach einem der weiteren Ansprüche 11 bis 13 stellt deren Verriegelungseinrichtung gewissermaßen eine bauliche Einheit dar, welche mit einem äußerst geringen Montageaufwand in die Spritzgießeinheit, beispielsweise zur Nachrüstung, eingebaut, als solche auf Lager gehalten und im Reparaturfalle ausgetauscht werden kann.

Bei dem erfindungsgemäßen Aufbau kann, dank einer sehr offenen Bauweise, mit einem Blick festgestellt werden, ob sich die Schieber in oder außer Verriegelungsposition befinden.

Schließlich gestattet das genannte Lösungsprinzip eine bisher unerreichte kurze Bauweise der Spritzgießeinheit.

Beim Aufbau der Verriegelungseinrichtung entsprechend den Patentansprüchen 11 bis 13 hängt es von den Reibungswiderständen in den Nutenführungen der diametralen Schieber ab, ob sich bei Betätigung der Hydraulikzylinder zuerst der eine oder der andere diametrale Schieber in Verriegelungsposition bewegt, oder ob sich die Bewegungen beider diametraler Schieber überschneiden. Da die genannten Reibungswiderstände in den Führungen der beiden Schieber in aller Regel nicht gleich groß sind, werden die diametralen Schieber in aller Regel nicht gleichzeitig aus ihrer Hintergriffsposition herausgefahren. Dasselbe gilt für eine durch Federn bewirkte Bewegung der diametralen Schieber in Verriegelungsposition. Bei alledem ist die durch die beiden diametralen Schieber mit ihren Hydraulikzylindern und ihren Mitnehmerbrücken zur Mitnahme der rotierbaren und der weiteren Schieber gebildete bauliche Einheit bereits auch außerhalb der Spritzgießeinheit auf Funktionsfähigkeit überprüfbar und mit einem extrem geringen Montageaufwand in die Spritzgießeinheit einbaubar und ausbaubar. Somit liegen die Voraussetzungen dafür vor, daß ein Kunde die Spritzgießeinheit zunächst mit einer sehr einfachen mechanischen Kupplungseinrichtung bei geringem finanziellen Aufwand erwerben und zu einem späteren Zeitpunkt die mechanische Kupplungseinrichtung durch eine hydraulische Kupplungseinrichtung ersetzen kann, weil alle zum Wechsel, zum Austausch bzw. der Nachrüstung maßgeblichen Anschlußpartien für die mechanische Kupplungseinrichtungen und die hydraulischen Kupplungseinrichtungen gleich gestaltet sind.

Nachstehend wird die Erfindung anhand der Zeichnung in einem Ausführungsbeispiel erläutert.

Es zeigen :

Fig. 1, 1a Die mit der Kupplungseinrichtung versehene Spritzgießeinheit in Seitenansicht und teilweisem vertikalen Schnitt durch die Spritzachse bei verriegeltem Plastifizierzylinder und verriegelter Förderschnecke (Fig. 1) und bei entriegeltem Plastifizierzylinder und entriegelter Förderschnecke (Fig. 1a),

Fig. 2 eine Explosionszeichnung der perspektivisch in Vergrößerung dargestellten Kupplungseinrichtung der Spritzgießeinheit,

Fig. 2a das perspektivisch dargestellte Mitnehmerstück der Fig. 2 in einer anderen Ansicht,

Fig. 3 und 4 Schnitte nach Linien III-III und IV-IV in Fig. 1 und 2,

Fig. 5 den Trägerblock der Spritzgießeinheit mit einem mittels mechanischer Verriegelungseinrichtung axial und radial festgelegten Plastifizierzylinder.

Die mit der Verriegelungseinrichtung ausgerüstete Spritzgießeinheit umfaßt einen den Plastifizierzylinder 17 aufnehmenden Trägerblock (Block 10) mit Zufuhrkanälen 11 für das Kunststoffmaterial.

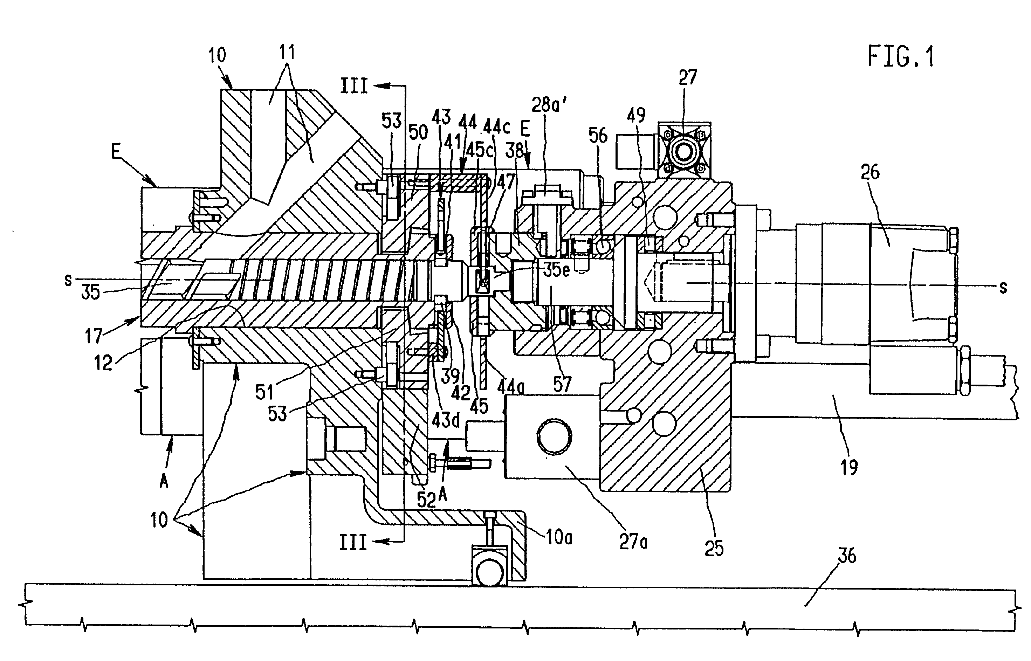

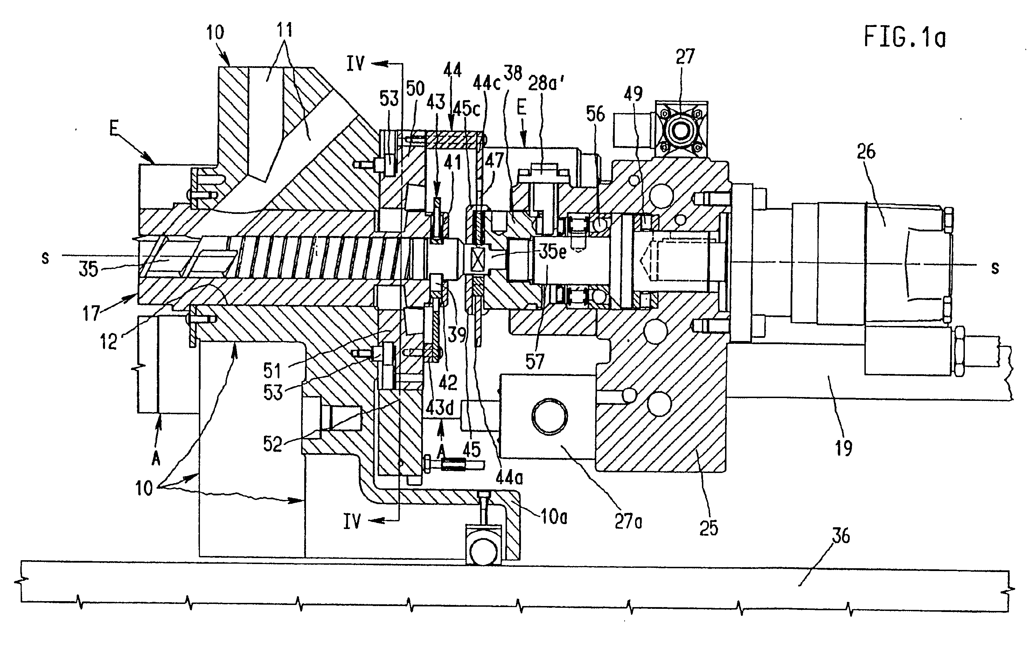

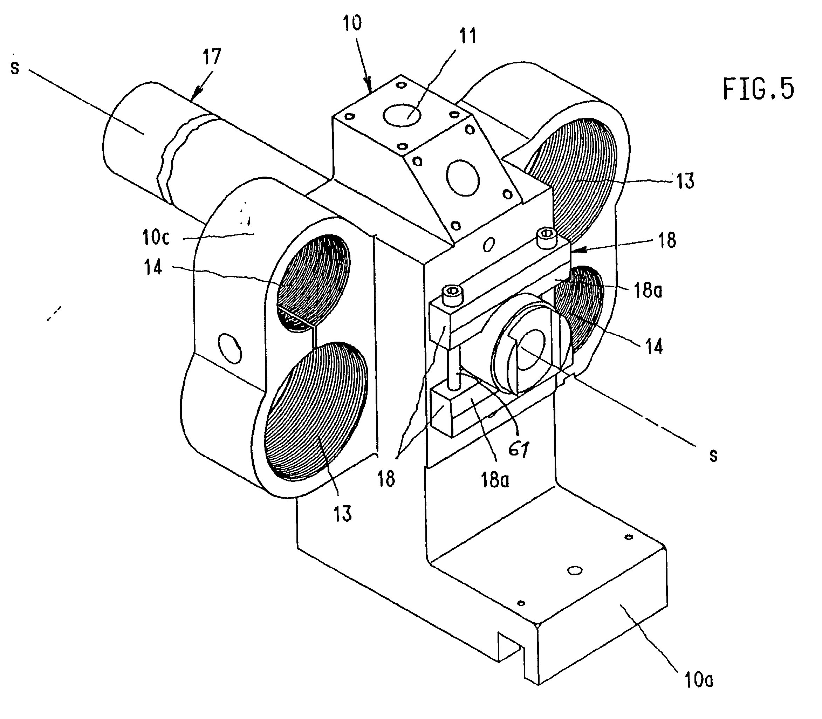

Wie aus Fig. 5 in Verbindung mit den Fign. 1, 1a erkennbar, sind in Bohrungen 14 des Blockes 10 hydraulische Antriebszylinder A zum axialen Verschieben der Spritzgießeinheit auf Führungssäulen 19 einfügbar. Die Kolben der Antriebszylinder A sitzen auf den Führungssäulen 19 auf. Die eigentlichen Zylinder der Antriebszylinder A bilden mit dem Block 10 und somit mit der Spritzgießeinheit eine Bewegungseinheit, die auf die Spritzgießform auffahrbar bzw. absetzbar ist. In weiteren Bohrungen 13 des Blockes 10 sind hydraulische Einspritzzylinder E zum axialen Antreiben der im Plastifizierzylinder 17 angeordneten, rotierbaren Förderschnecke 35 eingefügt. Die beiden Bohrungen 14 für die Antriebszylinder A und die beiden Bohrungen 13 für die Einspritzzylinder E liegen je diagonal im Block 10, wie insbesondere aus Fig. 5 ersichtlich. An den Einspritzzylindern E ist rückseitig eine Einspritzbrücke 25 mit Schaltventil 27 und einem Regelventil 27a befestigt, über welche die beiden Einspritzzylinder miteinander sowie mit der Förderschnecke für einen axialen Einspritzhub verbunden sind. Rückseitig an der Trägerbrücke 25 ist der Rotationsmotor 26 befestigt, der über eine Antriebswelle 57 mit Axiallager 49 und Radiallager 56 sowie über ein Mitnehmerstück 38 die Förderschnecke 35 antreibt. Der Block 10 ist über eine rückseitige Ausformung 10a und rollende Organe auf dem Maschinenfuß 36 abgestützt.

Die an der planen Rückseite des Blockes 10 gleitbar anliegenden diametralen Schieber 50 ; 51, 52 sind in der vertikalen Symmetrieebene der Spritzgießeinheit mittels Führungsnuten 50c, 51c an im Block verankerter Führungsbolzen 53 geführt.

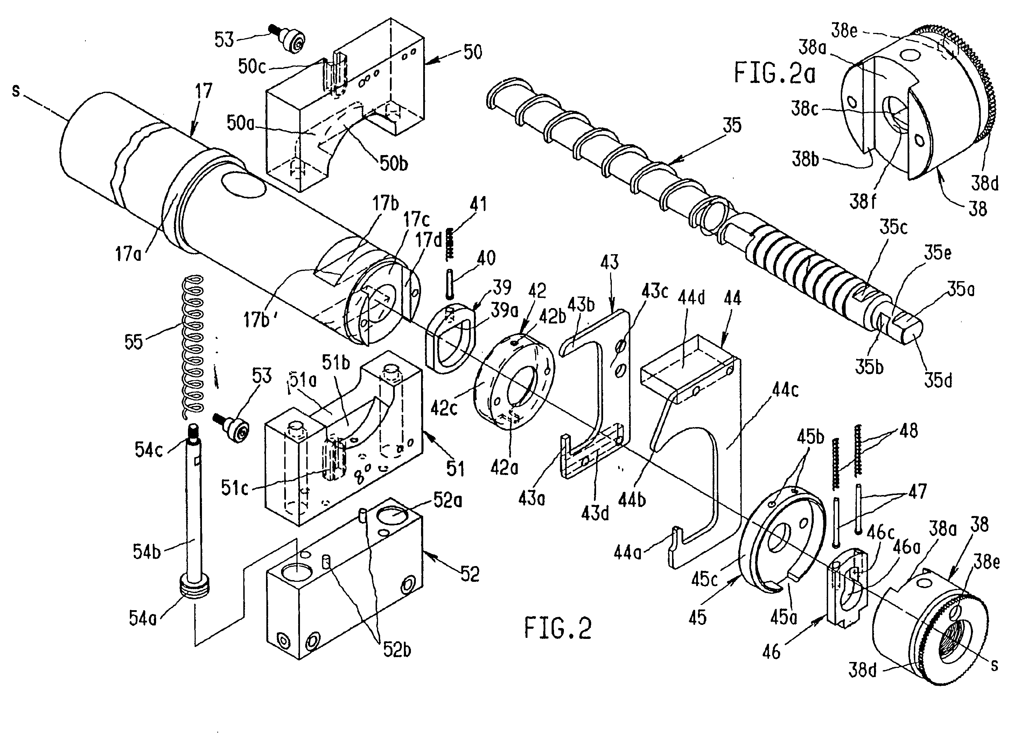

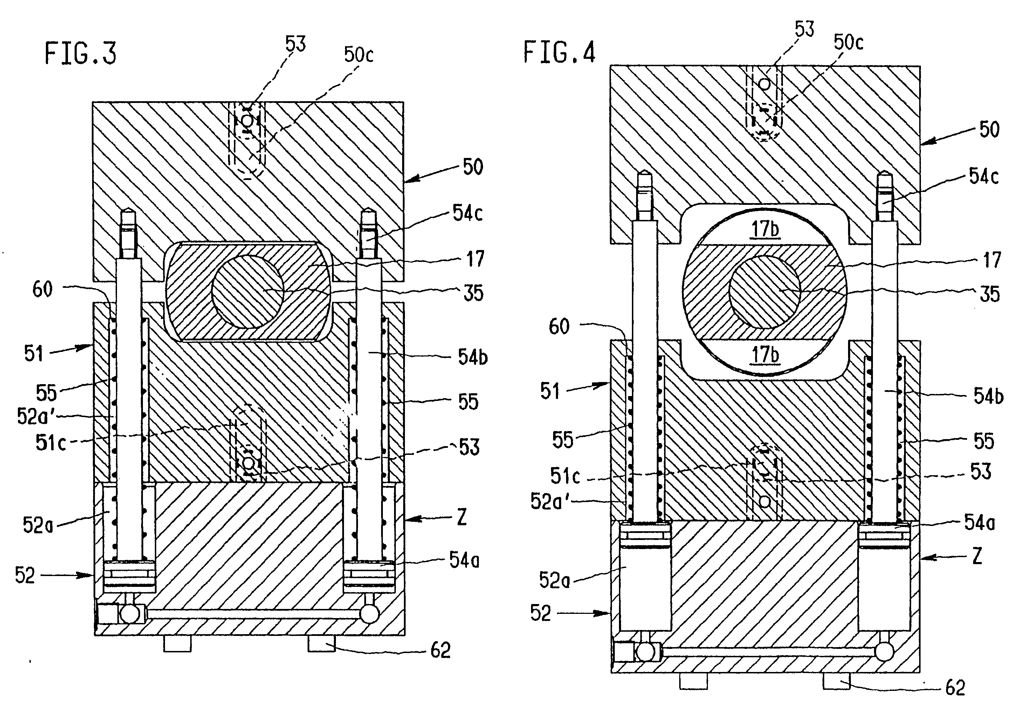

Die Führungsnut 50c im oberen Schieber 50 endigt frei an dessen Oberkante. Der untere Schieber 51,52 ist aus einem äußeren Schieberteil 52 mit Sacklochbohrungen (Bohrungen 52a) und einem inneren Schieberteil 51 mit Sacklochbohrungen (Bohrungen 52a') geringerer lichter Weite zusammengesetzt, die koaxial zu den Bohrungen 52a liegen. Die Führungsnut 51c im inneren Schieberteil 51 endigt an dessen Unterkante und ist unten durch das äußere Schieberteil 52 abgedeckt. Die Bohrungen 52a im äußeren Schieberteil 52 bilden die Zylinderkammern für Hydraulikzylinder Z. Die Bohrungen 52a' im inneren Schieberteil 51 sind von den Kolbenstangen 54b der Hydraulikzylinder Z durchgriffen, welche Kolbenstangen 54b im oberen Schieberteil 50 mittels Gewindezapfen 54c verankert sind. Das äußere Schieberteil 52 ist mittels Befestigungsschrauben 62 mit dem inneren Schieberteil 51 verbunden und mittels Zentrierzapfen 52b an diesem zentriert. Nach dem zeichnerisch dargestellten Ausführungsbeispiel sind die Hydraulikzylinder Z zur Entriegelung nur einseitig beaufschlagbar. In den Sacklochbohrungen des inneren Schieberteils 51 (Bohrungen 52a') sind als Schraubenfedern 55 ausgebildete Federn angeordnet, welche die Kolbenstangen 54b umschließen. Die Federn 55 sind einenends an Schultern 60 des inneren Schieberteils 51 gelagert. Am anderen Ende greifen sie an der Rückseite der Kolben 54a an. Die Arbeitsweise der diametralen Schieber 50 ; 51, 52 ergibt sich aus Fig. 3 in Verbindung mit Fig. 4. In Fig. 3 sind die Schieber 51, 52 ; 50 durch die Federn 55 in Verriegelungsposition gedrückt, in welcher ihre segmentartigen Eingriffspartien 50a ; 51a (Fig. 2) in diametrale Verriegelungsnuten 17b des Plastifizierzylinders 17 eingreifen. Die Kolben 54a befinden sich am unteren Ende der Bohrung 52a. In Fig. 4 sind durch Beaufschlagung der Kolben 54a mit Drucköl die Schieber 50 und 51, 52 auf maximalen gegenseitigen Abstand gesteuert. Die Kolben 54a befinden sich dabei am oberen Ende der Bohrungen 52a. Der Plastifizierzylinder ist für eine relative axiale Bewegung zum Block 10 frei.

Wie sich aus Fig. 3 in Verbindung mit Fig. 1 ergibt, liegen nach Verriegelung des Plastifizierzylinders 17 Schrägflächen 50b ; 51b segmentartiger Eingriffspartien 50a ; 51a (Fig. 2) an korrespondierenden Schrägflächen 17b' der Verriegelungsnuten 17b des Plastifizierzylinders 17 an. Dieser ist in einer zentralen Bohrung 12 (Fig. 1, 1a) des Blockes 10 im Verschiebesitz aufgenommen. Durch das Zusammenarbeiten der Schrägflächen 50b, 51b der Schieber 50 ; 51, 52 mit den korrespondierenden Schrägflächen 17b' des Plastifizierzylinders ist der verriegelte Plastifizierzylinder 17 im Block axial verspannt, da er an der Stirnseite des Blockes 10 mit Hilfe eines Radialflansches 17a axial widergelagert ist.

Der gemäß Fig. 4 entriegelte Plastifizierzylinder 17 kann nach axialer Arretierung (zeichnerisch nicht dargestellt) durch eine begrenzte Rückwärtsbewegung des Blockes 10 im Gefolge eines Rückwärtshubes der Antriebszylinder A aus der zentralen Bohrung 12 des Blockes freigesetzt und sodann im Rahmen eines Wechsels abtransportiert werden.

Die Förderschnecke 35 ist mit Hilfe eines durch Abflachungen 35a (Fig. 2) gebildeten Mitnahmeprofils in ein korrespondierendes Mitnahmeprofil 38c des Mitnehmerstückes 38 der Antriebswelle 57 zur radialen Mitnahme einsteckbar. Im Mitnahmestück 38 ist die eingesteckte Förderschnecke in einem zylindrischen Abschnitt 35e an einer Ringschulter 38f (Fig. 2a) zentriert.

Die Förderschnecke 35 ist mit Hilfe einer den Rotationsmotor 26 auf Stillstand steuernden Orientierungseinrichtung auf eine Soll-Winkelstellung steuerbar. Die Orientierungseinrichtung umfaßt einen stationären Sensor 28a' (Fig. 1, 1a) und einen mit der Förderschnecke rotierenden Geber 38e (Fig. 2) der am Mitnehmerstück 38 induktive Zählimpulse liefert. Eine Verzahnung 38d am Mitnehmerstück 38 ermöglicht eine induktive Drehzahlmessung über den stationären Sensor 28a'. Im zeichnerischen Ausführungsbeispiel liegt die Verschieberichtung des rotierbaren Schiebers 46 vertikal. Wie aus den Fign. 1, 1a in Verbindung mit Fig. 2 ersichtlich, ist am oberen diametralen Schieber 50 eine Mitnehmerbrücke 44 befestigt. Diese umfaßt eine flach ausgebildete, quer zur Spritzachse s-s angeordnete Mitnehmerklaue 44c, die über ein Distanzstück 44d mit dem diametralen Schieber 50 verbunden ist. Die Mitnehmerklaue 44c der Mitnehmerbrücke 44 hintergreift den rotierbaren Schieber 46 zur synchronen Mitnahme auf zwei einander gegenüberliegenden Seiten. Dieser ist daher von unten her von einer Nase 44a der Mitnehmerklaue 44c und von oben von einer Kante der Mitnehmerklaue über Stifte 47 beaufschlagbar. Der rotierbare Schieber ist vom Einsteckende der Förderschnecke über eine Steueröffnung 46a durchgriffen, also ringförmig gestaltet, wie insbesondere aus Fig. 2 erkennbar. Er ist in einer radialen, durch einen Deckel abgedeckten Führungsnut 38a mit Führungsflanke 38b (Fig. 2a) des Mitnehmerstückes 38 verschiebbar aufgenommen.

Der Deckel 45 übergreift das Mitnehmerstück 38 mit einem axialen Flansch 45c teilweise. Bei entriegelter Förderschnecke 35 (Fig. 1a) durchgreift die Nase 44a den axialen Flansch 45c des Deckels 45 über eine Öffnung 45a. Die Stifte 47 sind in Sacklochbohrungen des rotierbaren Schiebers 46 aufgenommen und durchgreifen den axialen Flansch 45c über Löcher 45b. Der rotierbare Schieber 46 ist bei der Entriegelungsbewegung von der Mitnehmerbrücke 44 entgegen der Wirkung von Federn in Entriegelungsposition mitnehmbar. Die als Schraubenfedern ausgebildeten Federn 48 drücken den rotierbaren Schieber 46 bei Verriegelungsbewegung des diametralen Schiebers 50 in Verriegelungsposition.

Die schlüssellochförmige Steueröffnung 46a weist einen unteren, der Durchmesser des Einsteckendes 35d der Förderschnecke 35 entsprechenden Bereich und einen oberen, von Eingriffsflanken 46c des rotierbaren Schiebers 46 begrenzten oberen Bereich geringerer Breite auf. Bei verriegeltem Schieber 46 greifen die Eingriffsflanken in diametrale Ausnehmungen 35b des Einsteckendes ein, welche durch vertikale Abflachungen 35e gebildet sind, die senkrecht zu den Abflachungen 35a des Mitnahmeprofils stehen. In dieser Verriegelungsposition liegt der Schwerpunkt des rotierbaren Schiebers 46 exzentrisch zur Spritzachse s-s. Dies hat zur Folge, daß er bei rotierender Förderschnecke durch die entwickelten Zentrifugalkräfte zusätzlich in Verriegelungsposition gedrückt wird. Die Schraubenfedern (Federn 48) sind, wie aus den Fign. 1, 1a, 2 ersichtlich, am Axialflansch 45c des Deckels 45 widergelagert und greifen am Grunde der die Stifte 47 aufnehmenden Sacklochbohrungen an, um diesen in Verriegelungsposition zu drücken. Die Überführung des rotierbaren Schiebers in Verriegelungsposition ist somit durch mehrere unabhängig voneinander wirksame Antriebsprinzipien abgesichert, nämlich zum einen durch die Federn 48, zum anderen durch eine Beaufschlagung durch die Mitnehmerbrücke 44 über die Stifte 47. Desweiteren durch die bei Rotation der Förderschnecke wirksam werdenden Zentrifugalkräfte des Schiebers. Denkbar ist selbstverständlich auch eine Einsteuerung des rotierbaren Schiebers 46 in Verriegelungsposition ausschließlich durch die Federn 48 oder ausschließlich im Gefolge der synchronen Mitnahme durch den oberen diametralen Schieber 50. Bei Rotation der Förderschnecke sollten sich die Mitnehmerorgane der Mitnehmerbrücke 44, nämlich die Nase 44a und insbesondere die Kante 44b der Mitnehmerklaue 44c in geringfügigem Abstand vom rotierbaren Schieber 46 bzw. von dem mit diesem Schieber rotierenden Stiften 47 befinden, die aus dem axialen Flansch 45c herausragen. Dadurch werden unerwünschte Schleifeffekte vermieden. Der diesbezügliche Abstand der Nase 44a vom rotierbaren Schieber 46 bei verriegelter Förderschnecke ist ebenso aus Fig. 1 erkennbar wie der Abstand der Kante 44b der Mitnehmerklaue 44c von den Stiften 47. Bei eventuell fehlendem diesbezüglichem Sicherheitsabstand der Kante 44b von den Stiften 47, wird dieser Sicherheitsabstand bei Beginn der Rotation der Förderschnecke durch eine entsprechende Krümmung dieser Kante 44b automatisch herbeigeführt. Diese Krümmung ist nämlich derart ausgelegt, daß die Stifte bei beginnender Rotation der Förderschnecke 35 auf die Kante 44b zur geringfügigen Distanzierung auflaufen. Die Verriegelungseinrichtung zur gleichzeitigen Verriegelung von Plastifizierzylinder 17 und Förderschnecke 35 umfaßt weitere Verriegelungsorgane, die eine synchrone Verriegelung der Förderschnecke im Plastifizierzylinder im Gefolge der Entriegelung des Plastifizierzylinders bewirken. Diese Verriegelung dient der axialen radialen Festlegung der Förderschnecke im Plastifizierzylinder insbesondere für einen Transport außerhalb der Spritzgießeinheit.

Dazu ist ein weiterer Schieber 39 in einer rückseitigen Führungsnut 17c mit Führungsflanken 17d begrenzt radial verschieblich gelagert. Dieser Schieber greift bei entriegelten diametralen Schiebern 50 ; 51, 52 unter der Wirkung einer Feder 41 mit seiner Eingriffsflanke 39a in eine korrespondierende Ausnehmung 35c der Förderschnecke 35 ein. Die Ausnehmung 35c ist durch eine Abflachung des zylindrischen Einsteckendes gebildet, welche parallel zur Abflachung 35a des Mitnahmeprofils liegt. Die Führungsnut 17c ist von einem Deckel 42 abgedeckt. Dieser übergreift das rückwärtige Ende des Plastifizierzylinders 17 mit einem axial gerichteten Flansch 42c. Am unteren radialen Schieber 51, 52 ist eine Mitnehmerbrücke 43 befestigt. Diese liegt derart am weiteren Schieber 39 an, daß sich eine nahezu synchrone Bewegung des diametralen Schiebers und des weiteren Schiebers ergibt. Die Mitnehmerbrücke 43 umfaßt eine Mitnehmerklaue 43c, die über eine Distanzleiste 43d mit dem diametralen Schieber 51, 52 verbunden ist. Die Mitnehmerklaue 43c hintergreift den weiteren Schieber 39 zur Mitnahme auf zwei einander gegenüberliegenden Seiten. Der weitere Schieber 39 ist vom Einsteckende 35d der Förderschnecke 35 über eine zentrale Ausnehmung durchgriffen und von unten her von einer Nase 43a der Mitnehmerklaue 43c über eine Öffnung 42a im Flansch 42c und von oben her von einem Schenkel 43b der Mitnehmerklaue 43c über einen Stift 40 zur Mitnahme beaufschlagbar. Der weitere, ebenfalls ringförmig ausgebildete Schieber 39 ist bei Entriegelungsbewegung des radialen Schiebers 51, 52 und seiner Mitnehmerbrücke 43 unter der Wirkung einer Feder 41 in Verriegelungsposition verschiebbar. In dieser greift er in die Ausnehmung 35c des Einsteckendes der Förderschnecke 35 ein. Die Feder 41 . ist als Schraubenfeder ausgebildet und am axialen Flansch 42c des Deckels 42 widergelagert. Die Feder umschließt den in einer Sacklochbohrung des weiteren Schiebers 39 aufgenommenen Stift 40. Der Stift durchgreift seinerseits den axialen Flansch 42c über ein Loch 42b.

In Fig. 5 ist der Plastifizierzylinder 17 mit Hilfe einer mechanischen Verriegelungseinrichtung im Block 10 verriegelt. Diese umfaßt zwei mittels Gewindebolzen 61 in Hintergriffsposition verspannbare Verriegelungsleisten 18. Die Eingriffspartien 18a dieser Verriegelungsleisten 18 sind identisch mit den Eingriffspartien 50a, 51a der diametralen Schieber 50 ; 51, 52 der erfindungsgemäßen hydraulischen Verriegelungseinrichtung. Dadurch sind die mechanische und die hydraulische Verriegelungseinrichtung mit einem sehr geringen Montageaufwand auch von wenig geschultem Personal austauschbar, wenn zum Beispiel ein Käufer zunächst die Spritzgießeinheit bei geringem finanziellen Aufwand mit einer mechanischen Verriegelungseinrichtung beschafft und später mit der hydraulischen Verriegelungseinrichtung tauscht.

## Ansprüche

1. Kunststoff-Spritzgießeinheit (Spritzgießeinheit) mit einer Einrichtung (Verriegelungseinrichtung) zum gleichzeitigen programmgesteuerten Verriegeln des Plastifizierzylinders (17) und der Förderschnecke (35) mit dem Trägerblock (Block 10) des Plastifizierzylinders (17) bzw. mit der rotierbaren Antriebswelle (57) für die Förderschnecke (35), welche mit einem Mitnahmeprofil (Abflachungen 35a) in ein korrespondierendes Mitnahmeprofil eines Mitnehmerstückes (38) der Antriebswelle (57) einsteckbar und mittels hydraulischer Einspritzzylinder (E) zum Einspritzen des Kunststoffes axial verschiebbar ist, mit zwei am Block (10) radial geführten und diametral angeordneten Schiebern (diametrale Schieber 50 ; 51, 52), die mittels wenigstens eines Hydraulikzylinders (Z) aus ihrer Verriegelungsposition verschiebbar sind, und mit einem am Mitnehmerstück (38) radial geführten rotierbaren Schieber (46), der in einer die Verriegelung der Förderschnecke (35) ermöglichenden Soll-Winkelstellung mittels desselben Hydraulikzylinders (Z) aus Verriegelungsposition verschiebbar ist, welche Soll-Winkelstellung mit Hilfe einer den Rotationsmotor (26) für die Förderschnecke auf Stillstand steuernden Orientierungseinrichtung (Sensor 28a, Geber 38e) herstellbar ist, dadurch gekennzeichnet, daß an einem der diametralen Schieber (51, 52 ; 50) eine Mitnehmerbrücke (44) befestigt ist, die den rotierbaren Schieber (46) bei Soll-Winkelstellung für eine gemeinsame Verriegelungsbewegung von diametralem (51, 52 oder 50) und rotierbarem Schieber (46) hintergreift.

2. Spritzgießeinheit nach Patentanspruch 1, dadurch gekennzeichnet, daß der rotierbare Schieber (46) in einer radialen Führungsnut (38a) des Mitnehmerstückes (38) führbar ist und die Führungsnut (38a) durch einen Deckel (45) abgedeckt ist, welcher das Mitnehmerstück (38) mit einem axialen Flansch (45c) teilweise übergreift.

3. Spritzgießeinheit nach Patentanspruch 1 oder 2, dadurch gekennzeichnet, daß eine Mitnehmerklaue (44c) der Mitnehmerbrücke (44) den rotierbaren Schieber (46) zur synchronen Mitnahme auf zwei einander gegenüberliegenden Seiten hintergreift, wobei dieser Schieber (46) vom Einsteckende (35d) der Förderschnecke (35) über eine Steueröffnung (46a) durchgriffen und von unten her von einer Nase (44a in Fig. 1, 1a, 2) der Mitnehmerklaue (44c) über eine Öffnung (45a) im Flansch (45c) des Deckels (45) und von oben von einer Kante (44b) der Mitnehmerklaue (44c) über Stifte (47) je zur Mitnahme beaufschlagbar ist.

4. Spritzgießeinheit nach einem der vorhergehenden Patentansprüche, dadurch gekennzeichnet, daß der rotierbare Schieber (46) bei der Entriegelungsbewegung des diametralen Schiebers (51, 52) von der Mitnehmerbrücke (44) entgegen der Wirkung von Federn (48) in Entriegelungsposition mitnehmbar ist, welche als Schraubenfeder ausgebildeten Federn (48) den rotierbaren Schieber (46) bei Verriegelungsbewegung des diametralen Schiebers (50) in Verriegelungsposition drücken, in welcher Verriegelungsposition der rotierbare Schieber (46) in mindestens eine Ausnehmung (35b) der Förderschnecke (35) eingreift, und die in Sacklochbohrungen des rotierbaren Schiebers (46) aufgenommenen Stifte (47) umschließen, welche den axialen Flansch (45c) über Löcher (45b) durchgreifen.

5. Spritzgießeinheit nach einem der Patentansprüche 3 bis 4, dadurch gekennzeichnet, daß die schlüssellochförmige Steueröffnung (46a) einen dem Durchmesser des Einsteckendes (35d) der Förderschnecke (35) entsprechenden unteren Bereich und einen von Eingriffsflanken (46c) des Schiebers (46) begrenzten oberen Bereich geringerer Breite aufweist und daß bei verriegeltem Schieber (46) die Eingriffsflanken (46c) in diametrale Ausnehmungen (35b) des Einsteckendes der Förderschnecke (35) eingreifen, wobei der Schwerpunkt des Schiebers (46) exzentrisch zur Spritzachse (s-s) liegt.

6. Spritzgießeinheit nach einem der Patentansprüche 3-5, gekennzeichnet durch eine solche Krümmung der Kante (44b) der Mitnehmerklaue (44c), daß die Stifte (47) bei in unterster Stellung befindlicher Mitnahmebrücke (44) durch eine beginnende Rotation der Förderschnecke (35) auf die Kante (44b) zur geringfügigen Distanzierung der Stifte (47) auflaufen.

7. Spritzgießeinheit nach einem der vorhergehenden Patentansprüche, dadurch gekennzeichnet, daß in einer rückseitigen von einem Deckel (42) abgedeckten Führungsnut (17c) des Plastifizierzylinders (17) ein weiterer Schieber (39) begrenzt radial verschieblich gelagert ist, der bei entriegelten diametralen Schiebern (50 ; 51, 52) unter der Wirkung einer Feder (41) in eine Ausnehmung (35c) der Förderschnecke (35) zur axialen und radialen Festlegung der Förderschnecke (35) in den Plastifizierzylinder (17) eingreift, wobei der Deckel (42) das rückwärtige Ende des Plastifizierzylinders (17) mit einem axial gerichteten Flansch (42c) übergreift.

8. Spritzgießeinheit nach einem der vorhergehenden Patentansprüche, dadurch gekennzeichnet, daß an demjenigen diametralen Schieber (51 ; 52 ; 50), der an der Steuerung des rotierbaren Schiebers (46) nicht teilhat, eine Mitnehmerbrücke (43) befestigt ist und derart am weiteren Schieber (39) anliegt, daß sich eine nahezu zur Bewegung des diametralen Schiebers (51, 52 ; 50) synchrone Mitnahme des weiteren Schiebers (46) ergibt, wobei eine Mitnehmerklaue (43c) der Mitnehmerbrücke (43) und den weiteren Schieber (39) auf zwei einander gegenüberliegenden Seiten hintergreift, und daß der weitere Schieber (39) vom Einsteckende (35d) der Förderschnecke (35) über eine zentrale Ausnehmung durchgriffen und von unten her von einer Nase (43a) der Mitnehmerklaue (43c) der Mitnehmerbrücke (43) über eine Öffnung (42a) im Flansch (42c) und von oben her von einem Schenkel (43b) der Mitnehmerklaue (43c) über einen Stift (40) zur Mitnahme beaufschlagbar ist.

9. Spritzgießeinheit nach einem der Patentansprüche 7 bis 8, dadurch gekennzeichnet, daß der weitere Schieber bei Entriegelungsbewegung des diametralen Schiebers (51, 52) und seiner Mitnehmerbrücke (43) unter der Wirkung einer Feder (41) in Verriegelungsposition verschiebbar ist, in welcher er in eine Ausnehmung (35c) des Einsteckendes der Förderschnecke (35) eingreift, wobei die als Schraubenfeder ausgebildete und am axialen Flansch (42c) des Deckels (42) widergelagerte Feder (41) den in einer Sacklochbohrung des weiteren Schiebers (39) aufgenommenen Stift (40) umschließt, welcher seinerseits den axialen Flansch (42c) über ein Loch (42b) durchgreift.

10. Spritzgießeinheit nach einem der vorhergehenden Patentansprüche 5 bis 9, dadurch gekennzeichnet, daß sich die diametralen Ausnehmungen (35b) am Einsteckende der Förderschnecke (35) im axialen Abstand zu den diametralen Abflachungen (35a) des Mitnahmeprofils der Förderschnecke befinden und daß zwischen den Ausnehmungen (35b) und den Abflachungen (35a) ein zylindrischer Abschnitt (35e) gebildet ist, der zur Zentrierung an der korrespondierenden Ringschulter (38f in Fig. 2a) des Mitnehmerstücks (38) anliegt, und daß die Förderschnecke (35) mit Hilfe eines stationären Sensors (28a') und eines rotierenden Gebers (38e) in einer Soll-Winkelstellung zum Stillstand bringbar ist, bei der Ausnehmungen (35b ; 35c) und Abflachungen (35a) horizontal und vertikal liegen.

11. Spritzgießeinheit nach einem der vorhergehenden Patentansprüche, dadurch gekennzeichnet, daß die diametralen Schieber (50 ; 51, 52) über zwei Hydraulikzylinder (Z) miteinander verbunden sind, deren eigentliche durch Bohrungen (52a) in einem der diametralen Schieber (50 ; 51, 52) gebildete Zylinder in dem einen Schieber (51, 52 oder 50) angeordnet und deren Kolbenstangen (54b) in dem anderen Schieber (50 oder 51, 52) verankert sind und daß die diametralen Schieber (50 ; 51, 52) an Führungsbolzen (53) des Blockes (10) geführt sind, deren Köpfe sich in Führungsnuten (50c) der diametralen Schieber befinden.

12. Spritzgießeinheit nach einem der vorhergehenden Patentansprüche, dadurch gekennzeichnet, daß Schrägflächen (50b ; 51b) segmentartiger Eingriffspartien (50a ; 51a in Fig. 2) der diametralen Schieber (50 ; 51, 52) an korrespondierenden Schrägflächen (17b') diametraler Verriegelungsnuten (17b) des Plastifizierzylinders (17) anliegen, der mittels eines Radialflansches (17a) an der Stirnseite des Blockes (10) axial widergelagert ist.

13. Spritzgießeinheit nach einem der Patentansprüche 12 bis 13, dadurch gekennzeichnet, daß die Hydraulikzylinder (Z) zur Entriegelung nur einseitig beaufschlagbar und daß zur Verriegelung an den Kolben (54a) der Hydraulikzylinder (Z) angreifende, vorgespannte Schraubenfedern (Federn 55) an Schultern (60) des betreffenden diametralen Schiebers (51, 52) widergelagert sind, wobei der die eigentlichen Zylinder der Hydraulikzylinder (Z) enthaltende diametrale Schieber (51, 52) aus einem äußeren Schieberteil (52) mit Zylinderräume bildenden Sacklochbohrungen (Bohrungen 52a) und einem inneren Schieberteil (51) mit Sacklochbohrungen (Bohrungen 52a') geringerer lichter Weite für den Durchgriff der Kolbenstangen (54b) zusammengesetzt ist.

14. Spritzgießeinheit nach einem der vorhergehenden Patentansprüche, dadurch gekennzeichnet, daß der axial arretierte und entriegelte Plastifizierzylinder (17) durch eine begrenzte Rückwärtsbewegung des Blockes (10) im Gefolge eines Rückwärtshubes der Antriebszylinder (A) aus der zentralen Bohrung (12) des Blockes (10) freisetzbar ist und bedarfsweise mit einer mechanischen Verriegelungseinrichtung im Block (10) verriegelbar ist, welche zwei mittels Gewindebolzen (61) in Hintergriffsposition verspannbare Verriegelungsleisten (18) umfaßt, deren Eingriffspartien (18a) identisch sind mit den Eingriffspartien (50a, 51a) der diametralen Schieber (50 ; 51, 52).

## Claims

1. Plastic injection-moulding unit (injection-moulding unit) comprising a device (locking device) for simultaneous program-controlled locking of the plastification cylinder (17) and the feed screw (35) to the carrier block (block 10) of the plastification cylinder (17) or to the rotary driveshaft (57) of the feed screw (35) respectively which is inserted by way of a pick-up profile (flattened surface 35a) into a corresponding pick-up profile of a pick-up means (38) of the driveshaft (57) and axially displaceable by means of hydraulic injection cylinders (E) for the injection of the plastic material,

comprising two slides (diametrical slides 50 ; 51, 52) which are radially guided on the block (10) and diametrically arranged and which are displaceable from their locking position by means of at least one hydraulic cylinder (Z),

and comprising a rotary slide (46) which is radially guided at the pick-up means (38) and which is slideable from the locking position by means of the same hydraulic cylinder (Z) at a nominal angular position which permits locking of the feed screw (35), which nominal angular position is established with the aid of an orientation means (sensor 28a, transmitter 38e) which places the rotary motor (26) of the feed screw in an idle position, **characterised in that** a pick-up bridge (44) is attached to one of the diametrical slides (51, 52 ; 50) which rearwardly engages the rotary slide (46) at the nominal angular position for a joint locking movement of diametrical (51, 52 or 50) and rotary slide (46).

2. Injection-moulding unit according to claim 1, **characterised in that** the rotary slide (46) is guided in a radial guide groove (38a) of the pick-up means (38), and in that the guide groove (38a) is covered by a cover (45) which partially reaches over the pick-up means (38) by means of an axial flange (45c).

3. Injection-moulding unit according to claim 1 or 2, **characterised in that** a pick-up claw (44c) of the pick-up bridge (44) rearwardly engages the rotary slide (46) for synchronous pick-up on two opposite sides, in which respect this slide (46) is passed through from the insert end (35d) of the feed screw (35) via a control aperture (46a) and loaded for a pick-up from below by a nose (44a in Fig. 1, 1a, 2) of the pick-up claw (44c) via an aperture (45a) in the flange (45c) of the cover (45), and from the top by an edge (44b) of the pick-up claw (44c) via pins (47).

4. Injection-moulding unit according to one of the above claims, **characterised in that** the rotary slide (46) is picked up during the unlocking movement of the diametrical slide (51, 52) by the pick-up bridge (44) against the force of springs (48) in the unlocking position, which springs (48) are helical springs pushing the rotary slide (46) during the locking movement of the diametrical slide (50) into the locking position in which the rotary slide (46) engages at least one recess (35b) of the feed screw (35), and which surround the pins (47), accommodated in pocket bores of the rotary slide (46), which reach through the axial flange (45c) via holes (45b).

5. Injection-moulding unit according to one of claims 3 to 4, **characterised in that** the keyhole-shaped control aperture (46a) comprises a lower area which corresponds to the diameter of the insert end (35d) of the feed screw (35), and an upper area of lesser width which is defined by the engaging flanks (46c) of the slide (46), and in that the engaging flanks (46c) enter into diametrical recesses (35b) of the insert end of the feed screw (35) when the slide is locked (46), in which respect the gravity point of the slide (46) is eccentric relative to the injection axis (s-s).

6. Injection-moulding unit according to one of claims 3-5, **characterised by** a curvature of the edge (44b) of the pick-up claw (44c) so that, with the pick-up bridge (44) in the lowermost position and with commencing rotation of feed screw (35), the pins (47) run up to the edge (44b) for narrow spacing of the pins (47).

7. Injection-moulding unit according to one of the above claims, **characterised in that** another slide (39) is mounted in a rear guide groove (17c), which is covered by a cover (42), of the plastification cylinder (17), limited in its radial displaceability and, with the diametrical slides (50 ; 51 ; 52) unlocked under the force of a spring (41), engaging a recess (35c) of the feed screw (35) for axial and radial fixing of the feed screw (35) in the plastification cylinder (17), in which respect the cover (42) reaches over the rear end of the plastification cylinder (17) by means of an axially oriented flange (42c).

8. Injection-moulding unit according to one of the above claims, **characterised in that** a pick-up bridge (43) is attached to the diametrical slide (51 ; 52 ; 50) which does not parttake in the control of the rotary slide (46), and abuts against the other slide (39) in such a manner that a pick-up, which is virtually synchronous to the movement of the diametrical slide (51, 52 ; 50) of the other slide (46), of the other slide (46) results, whereby a pick-up claw (43c) of the pick-up bridge (43) rearwardly engages the other slide (39) on two opposite sides, and in that the other slide (39) is passed through from the insert end (35d) of the feed screw (35) via a central recess, and for the purpose of being picked up is loaded from below by a nose (43a) of the pick-up claw (43c) of the pick-up bridge (43) via an aperture (42a) in the flange (42a), and from the top by a shank (43b) of the pick-up claw (43c) via a pin (40).

9. Injection-moulding unit according to one of claims 7 to 8, **characterised in that**, during the unlocking movement of the diametrical slide (51, 52) and its pick-up bridge (43), the other slide is displaceable under the force of a spring (41) in the locking position, in which it engages into a recess (35c) of the insert end of the feed screw (35), whereby spring (41), which is a coiled spring seated against the axial flange (42c) of the cover (42), surrounds the pin (40) which is accommodated in a pocket bore of the other slide (39) and which passes through the axial flange (42c) via a hole (42b).

10. Injection-moulding unit according to one of the above claims 5 to 9, **characterised in that** the diametrical recesses (35b) are located at the insert end of the feed screw (35) at an axial distance to the diametrical flattened surfaces (35a) of the pick-up profile of the feed screw, and in that a cylindrical section (35e) is formed between the recesses (35b) and the flattened surfaces (35a), which section for the purpose of centering abuts against the corresponding annular shoulder (38f in Fig. 2a) of the pick-up member (38), and in that the feed screw (35) is stopped, by means of a stationary sensor (28a') and a rotary transmitter (38e), in a nominal angular position in which the recesses (35b ; 35c) and the flattened surfaces (35a) are horizontally and vertically disposed.

11. Injection-moulding unit according to one of the above claims, **characterised in that** the diametrical slides (50 ; 51, 52) are connected to each other via two hydraulic cylinders (Z), the actual cylinders of which, established by bores (52a) in one of the diametrical slides (50 ; 51, 52), are arranged in the one slide (51, 52 or 50) and their piston rods (54b) are anchored in the other slide (50 or 51, 52), and in that the diametrical slides (50 ; 51, 52) are guided on guide bolts (53) of the block (10), the heads of which are placed in guide grooves (50c) of the diametrical slide.

12. Injection-moulding unit according to one of the above claims, **characterised in that** slanting surfaces (50b ; 51b) of segmented engaging portions (50a ; 51a in Fig. 2) of the diametrical slides (50 ; 51, 52) abut against corresponding slanting surfaces (17b') of diametrical locking grooves (17b) of the plastification cylinder (17) which is axially seated by means of a radial flange (17a) at the front end of the block (10).

13. Injection-moulding unit according to one of claims 12 to 13, **characterised in that** for unlocking the hydraulic cylinders (Z) are loaded on one side only, and in that for locking tensioned coiled springs (springs 55) which abut against the piston (54a) of the hydraulic cylinder (Z) are seated on shoulders (60) of the respective diametrical slide (51, 52), in which respect the diametrical slide (51, 52) which includes the actual cylinders of the hydraulic cylinder (Z), is composed of an outer slide member (52) with pocket bores (bores 52a) forming cylinder spaces and of an inner slide member (51) with pocket bores (bores 52a') of lesser clearance for passage of the piston rods (54b).

14. Injection-moulding unit according to one of the above claims, **characterised in that** the axially arrested and unlocked plastification cylinder (17) is released from the central bore (12) of the block (10) by a limited reverse movement of the block (10) subsequent to a reverse stroke of the drive cylinder (A) and, if required, locked in the block (10) by means of a mechanical locking means which comprises two locking ledges (18), which are clamped in the rearward engaging position by means of threaded bolts (61) the engaging portions (18a) of which are identical to the engaging portions (50a, 51a) of the diametrical slides (50 ; 51, 52).

## Revendications

1. Unité de moulage de matière plastique par injection (unité de moulage par injection) comprenant un dispositif (dispositif de verrouillage) destiné à verrouiller simultanément de manière programmée le cylindre de ramollissement (17) et la vis sans fin de déplacement (35) sur le bloc porteur (bloc 10) du cylindre de ramollissement (17) et, respectivement, sur l'arbre d'entraînement tournant (57) destiné à la vis sans fin de déplacement (35), laquelle peut être enfoncée par un profil d'entraînement (méplats 35a) dans un profil d'entraînement correspondant d'une pièce d'entraînement (38) de l'arbre d'entraînement (57) et peut être déplacée axialement au moyen de vérins hydrauliques d'injection (E) pour l'injection de la matière plastique,

comprenant deux coulisseaux guidés radialement sur le bloc (10) et disposés de manière diamétralement opposée (coulisseaux diamétralement opposés 50 ; 51, 52) qui peuvent être déplacés hors de leur position de verrouillage au moyen d'au moins un vérin hydraulique (Z),

et comprenant un coulisseau tournant (46) qui est guidé radialement sur la pièce d'entraînement (38) et qui, dans une position angulaire de consigne permettant le verrouillage de la vis sans fin de déplacement (35), peut être déplacé hors de la position de verrouillage au moyen du même vérin hydraulique (Z), ladite position angulaire de consigne pouvant être obtenue à l'aide d'un dispositif d'orientation (capteur 28a', émetteur 38e) qui commande l'arrêt du moteur de rotation (26) destiné à la vis sans fin de déplacement, caractérisée par le fait qu'est fixé sur l'un des coulisseaux diamétralement opposés (50 ; 51, 52) un pontet d'entraînement (44) qui vient en prise par l'arrière avec le coulisseau tournant (46) dans la position angulaire de consigne en vue d'un déplacement de verrouillage commun du coulisseau diamétralement opposé (51, 52 ou 50) et du coulisseau tournant (46).

2. Unité de moulage par injection selon la revendication 1, caractérisée par le fait que le coulisseau tournant (46) peut être guidé dans une rainure de guidage radial (38a) de la pièce d'entraînenent (38), et que la rainure de guidage (38a) est recouverte par un couvercle (45) qui recouvre partiellement la pièce d'entraînement (38) par un rebord axial (45c).

3. Unité de moulage par injection selon la revendication 1 ou 2, caractérisée par le fait qu'une mâchoire d'entraînement (44c) du pontet d'entraînenent (44) vient en prise par l'arrière sur deux côtés opposés l'un à l'autre avec le coulisseau tournant (46) en vue de l'entraînement synchrone, ce coulisseau tournant (46) étant traversé par l'extrémité d'enfoncement (35d) de la vis sans fin de déplacement (35) à travers une ouverture de commande (46a), en étant soumis à chaque fois à l'action, depuis le bas, d'un bec (44a sur les figures 1, 1a, 2) de la mâchoire d'entraînement (44c) à travers une ouverture (45a) ménagée dans le rebord (45c) du couvercle (45), et, depuis le haut, d'un bord (44b) de la mâchoire d'entraînement (44c) par l'intermédiaire de tiges (47).

4. Unité de moulage par injection selon l'une des revendications précédentes, caractérisée par le fait que le coulisseau tournant (46), lors du déplacement de déverrouillage du coulisseau diamétralement opposé (51, 52), peut être entraîné en position de déverrouillage par le pontet d'entraînement (44) à l'encontre de l'effet de ressorts (48) qui sont réalisés sous la forme de ressorts hélicoïdaux (48), qui, lors du déplacement de verrouillage du coulisseau diamétralement opposé (50), poussent le coulisseau tournant (46) en position de verrouillage, position de verrouillage dans laquelle le coulisseau tournant (46) pénètre dans au moins un évidement (35b) de la vis sans fin de déplacement (35), et qui entourent des tiges (47), lesquelles sont reçues dans des perçages borgnes du coulisseau tournant (46) et traversent le rebord axial (45c) par des trous (45b).

5. Unité de moulage par injection selon l'une des revendications 3 à 4, caractérisée par le fait que l'ouverture de commande (46a) en forme de trou de serrure présente une région inférieure correspondant au diamètre de l'extrémité d'enfoncement (35d) de la vis sans fin de déplacement (35) et une région supérieure de plus faible largeur limitée par des flancs de contact (46c) du coulisseau (46), et par le fait que, lorsque le coulisseau (46) est verrouillé, les flancs de contact (46c) pénètrent dans des évidements diamétralement opposés (35b) de l'extrémité d'enfoncement de la vis sans fin de déplacement (35), le centre de gravité du coulisseau (46) étant excentré par rapport à l'axe d'injection (s-s).

6. Unité de moulage par injection selon l'une des revendications 3 à 5, caractérisée par une courbure du bord (44b) de la mâchoire d'entraînement (44c) qui est telle que, lorsque le pontet d'entraînement (44) se trouve dans sa position la plus basse, les tiges (47) arrivent sur le bord (44b) grâce à un début de rotation de la vis sans fin de déplacement (35), en vue d'un faible écartement des tiges (47).

7. Unité de moulage par injection selon l'une des revendications précédentes, caractérisée par le fait que, dans une rainure de guidage (17c) du cylindre de ramollissement (17) qui est recouverte à l'arrière par un couvercle (42), est monté, en pouvant se déplacer radialement de manière limitée, un autre coulisseau (39) qui, lorsque les coulisseaux diamétralement opposés (50 ; 51, 52) sont déverrouillés, pénètre dans un évidement (35c) de la vis sans fin de déplacement (35) sous l'effet d'un ressort (41), en vue de la fixation axiale et radiale de la vis sans fin de déplacement (35) dans le cylindre de ramollissement (17), le couvercle (42) recouvrant l'extrémité arrière du cylindre de ramollissement (17) par un rebord dirigé axialement (42c).

8. Unité de moulage par injection selon l'une des revendications précédentes, caractérisée par le fait qu'un pontet d'entrainement (43) est fixé sur celui des coulisseaux diamétralement opposés (51, 52 ; 50) qui ne participe pas à la commande du coulisseau tournant (46), et qu'il porte sur l'autre coulisseau (39) de telle manière qu'il se produise un entraînenent de l'autre coulisseau (39) qui soit presque en synchronisme avec le déplacement du coulisseau diamétralement opposé (51, 52 ; 50), une mâchoire d'entraînement (43c) du pontet d'entraînenent (43) venant en prise par l'arrière avec l'autre coulisseau (39) sur deux côtés opposés l'un à l'autre, et par le fait que l'autre coulisseau (39) est traversé par l'extrémité d'enfoncement (35d) de la vis sans fin de déplacement (35) par une ouverture centrale et qu'en vue de l'entraînenent, il est soumis à l'action, depuis le bas, d'un bec (43a) de la mâchoire d'entraînement (43c) du pontet d'entraînement (43) à travers une ouverture (42a) ménagée dans le rebord (42c), et, depuis le haut, d'une aile (43b) de la mâchoire d'entraînement (43c) par l'intermédiaire d'une tige (40).

9. Unité de moulage par injection selon l'une des revendications 7 à 8, caractérisée par le fait que, lors du déplacement de déverrouillage du coulisseau diamétralement opposé (51, 52) et de son pontet d'entraînement (43), l'autre coulisseau peut être déplacé sous l'effet d'un ressort (41) jusque dans la position de verrouillage dans laquelle il pénètre dans un évidement (35c) de l'extrémité d'enfoncement de la vis sans fin de déplacement (35), cependant que le ressort (41), lequel est réalisé sous la forme d'un ressort hélicoïdal et s'appuie en contre-butée sur le rebord axial (42c) du couvercle (42), entoure la tige (40) qui est reçue dans un perçage borgne de l'autre coulisseau (39) et qui traverse pour sa part le rebord axial (42c) par un trou (42b).

10. Unité de moulage par injection selon l'une des revendications précédentes 5 à 9, caractérisée par le fait que les évidements diamétralement opposés (35b) ménagés à l'extrémité d'enfoncement de la vis sans fin de déplacement (35) se trouvent à distance dans le sens axial par rapport aux méplats diamétralement opposés (35a) du profil d'entraînement de la vis sans fin de déplacement et par le fait qu'entre les évidements (35b) et les méplats (35a) est formée une portion cylindrique (35e) qui porte sur les épaulements annulaires correspondants (38f sur la figure 2a) de la pièce d'entraînement (38) en vue du centrage, et par le fait que la vis sans fin de déplacement (35), à l'aide d'un capteur fixe (28a') et d'un émetteur tournant (38e), peut être amenée à l'arrêt dans une position angulaire de consigne dans laquelle les évidements (35b ; 35c) et les méplats (35a) sont horizontaux et verticaux.

11. Unité de moulage par injection selon l'une des revendications précédentes, caractérisée par le fait que les coulisseaux diamétralement opposés (50 ; 51, 52) sont reliés entre eux par l'intermédiaire de deux vérins hydrauliques (Z) dont les cylindres, constitués par des perçages (52a) ménagés dans l'un des coulisseaux diamétralement opposés (50 ; 51, 52), sont disposés dans l'un des coulisseaux (51, 52 ou 53), et dont les tiges de piston (54b) sont ancrées dans l'autre coulisseau (50 ou 51, 52), et par le fait que les coulisseaux diamétralement opposés (50 ; 51, 52) sont guidés sur des goujons de guidage (53) du bloc (10) dont les têtes se trouvent dans des rainures de guidage (50c) des coulisseaux diamétralement opposés.

12. Unité de moulage par injection selon l'une des revendications précédentes, caractérisée par le fait que des surfaces obliques (50b ; 51b) de parties d'attaque analogues à des segments (50a ; 51a sur la figure 2) des coulisseaux diamétralement opposés (50 ; 51, 52) portent sur des surfaces obliques correspondantes (17b') de rainures de verrouillage diamétralement opposées (17b) du cylindre de ramollissement (17) qui est en contre-butée axiale sur le côté frontal du bloc (10) au moyen d'une bride annulaire (17a).

13. Unité de moulage par injection selon l'une des revendications 12 à 13, caractérisée par le fait que les vérins hydrauliques (Z) ne peuvent être soumis à l'action du fluide que d'un côté en vue du déverrouillage, et par le fait que, pour le verrouillage, des ressorts hélicoïdaux à compression préalable (ressorts 55) sont en prise sur les pistons (54a) des vérins hydrauliques (Z) et sont en contrebutée sur des épaulements (60) du coulisseau diamétralement opposé (51, 52) qui est concerné, cependant que le coulisseau diamétralement opposé (51, 52) qui contient les cylindres des vérins hydrauliques (Z) est composé d'une partie de coulisseau extérieure (52) qui est pourvue de perçages borgnes (perçages 52a) constituant des volumes intérieurs de cylindre et d'une partie de coulisseau intérieure (51) qui est pourvue de perçages borgnes (perçages 52a') de diamètre intérieur plus faible pour le passage des tiges de piston (54b).

14. Unité de moulage par injection selon l'une des revendications précédentes, caractérisée par le fait que le cylindre de ramollissement (17), lorsqu'il est bloqué axialement et déverrouillé, peut être dégagé du perçage central (12) du bloc (10) par un déplacement limité vers l'arrière du bloc (10) à la suite d'une course vers l'arrière du cylindre d'entraînement (A), et que, si besoin en est, il peut être verrouillé dans le bloc (10) au moyen d'un dispositif de verrouillage mécanique comportant deux barres de verrouillage (18) qui peuvent être serrées en position de prise par l'arrière au moyen de goujons filetés (61) et dont les parties d'attaque (18a) sont identiques aux parties d'attaque (50a, 51a) des coulisseaux diamétralement opposés (50 ; 51, 52).

FIG.1

EP 0 314 943 B1

FIG.1a

EP 0 314 943 B1

FIG.2a

FIG.2

FIG.4

FIG.3

FIG.5